Europäisches Patentamt

European Patent Office

Office européen des brevets

(11) Veröffentlichungsnummer: **0 242 528**
B1

# EUROPÄISCHE PATENTSCHRIFT

(45) Veröffentlichungstag der Patentschrift:
31.10.90

(51) Int. Cl.⁵: **C08L 77/00**, C08L 65/00

(21) Anmeldenummer: 87102328.9

(22) Anmeldetag: **19.02.87**

(54) Schlagzähe Polyamid-Formmassen.

(30) Priorität: **22.04.86 DE 3613528**

(43) Veröffentlichungstag der Anmeldung:
**28.10.87 Patentblatt 87/44**

(45) Bekanntmachung des Hinweises auf die Patenterteilung:
**31.10.90 Patentblatt 90/44**

(84) Benannte Vertragsstaaten:
**AT BE CH DE ES FR GB IT LI LU NL SE**

(56) Entgegenhaltungen:
**US-A- 4 396 750**

(73) Patentinhaber: **HÜLS AKTIENGESELLSCHAFT,
Patentabteilung / PB 15 - Postfach 13 20,
D-4370 Marl 1(DE)**

(72) Erfinder: **Bartz, Wilfried, Dr., Stargarder Strasse 12,
D-4370 Marl(DE)**

## Beschreibung

Gegenstand der Erfindung sind schlagzähe Polyamid-Formmassen.

Polyamide sind bekannte und bewährte Konstruktionswerkstoffe, die sich z. B. nach Spritzgieß- oder Extrusionsverfahren verarbeiten lassen. In der Regel weisen Polyamide, insbesondere nach Konditionierung, eine gute Zähigkeit auf. Für bestimmte Anwendungen sind jedoch Verbesserungen hinsichtlich der Schlag- und Kerbschlagzähigkeit im spritzfrischen Zustand und besonders bei tiefen Temperaturen erwünscht.

Eine geeignete Maßnahme zur Annäherung an dieses Ziel ist die Verwendung von Polyamidblends, worunter in diesem Zusammenhang die innige Vermischung der Polyamide mit zähen Elastomeren oder zähen, hochmolekularen Thermoplasten verstanden wird. Spezielle Grundeigenschaften der Zusatzpolymeren können dadurch auf die Polyamidblends übertragen werden, ohne die typischen Polyamideigenschaften zu zerstören.

Um Polyamidblends mit zufriedenstellenden Eigenschaften zu erhalten, sind die zuzumischenden Polymeren jeweils auf den Anwendungsfall und den jeweiligen Polyamid-Typ hin zu optimieren. Da derartige Sonderpolymere in der erforderlichen Auswahl nicht am Markt verfügbar sind, besteht in der Regel das Problem, daß jeweils spezielle Produkte in zumeist kleinen Mengen auf kostenintensive Art hergestellt werden müssen.

Wegen dieser Probleme wird in der Praxis bei der Herstellung der Polyamid-Verschnittpolymeren ein zweiter Weg beschritten: Man greift auf die in großer Menge und Vielfalt verfügbaren olefinischen Polymeren, wie z. B. Polyethylen oder Ethylen/Propylen/-Dien-Copolymeren, zurück, die eine hohe (Kälte- oder Kerb-)Zähigkeit aufweisen.

Nach einem Vorschlag der DE-PS 11 31 883 sollen Gemische aus (1) Carbonamidgruppen enthaltenden Polykondensaten und (2) Polyolefinen, Polystyrol, Olefin- bzw. Styrolmischpolymerisaten, die außer Olefin oder Styrol auch andere olefinische ungesättigte Monomere einpolymerisiert enthalten können sowie (3) Radikale bildenden Katalysatoren bei 50 bis 350 °C homogenisiert werden, wobei sich Pfropfcopolymere aus (1) und (2) bilden sollen. Die so erhaltenen Produkte konnten jedoch nicht voll befriedigen.

Die offensichtlich bevorzugte und wirkungsvollste Ausführungsform des zweiten Weges besteht in der Pfropfung von hochmolekularen olefinischen Elastomeren mit vorzugsweise Maleinsäureanhydrid, beispielsweise nach Arbeitsverfahren, wie sie in der DE-OS 24 01 149 beschrieben sind. Nachteilig ist, daß wegen der stark gesundheitsgefährdenden Wirkung des Maleinsäureanhydrids die Reaktion nicht ohne weiteres in den üblichen Anlagen durchgeführt werden kann. Zudem sind die wirkungsvollen Elastomeren wegen ihrer Klebrigkeit schwer handhabbar, und der Pfropfprozeß führt wegen der stark scherenden Aggregate und der thermischen Belastung häufig zu Schädigungen der Elastomeren durch Verfärbungen, Abbau und/oder partielle Vernetzung. Polyamid-Blends mit derartigen Zusatzpolymeren werden in DE-OS 26 22 973 beschrieben.

Alle für den oben beschriebenen alternativen Weg brauchbaren Produkte müssen ein hohes Molgewicht aufweisen und besitzen demzufolge hohe Schmelzviskositäten, wenn sie gute Ergebnisse in den Polyamidblends bewirken sollen. Zugleich werden optimale Eigenschaften und Wirkungsgrade nur dann erzielt, wenn die Polymeren feindispers in der Polyamidmatrix verteilt sind. Diese Einarbeitung bereitet wegen der hohen Viskosität der Zusatzpolymeren und wegen der ungünstigen Viskositätsrelation Polyamid/Zusatzpolymer Schwierigkeiten. Durchsatzmenge und Schwankungen der Scherbedingungen erschweren die Herstellung einer reproduzierbar guten Qualität. Die Verwendung stark scherender Mischaggregate senkt zwar die Streuung der Werte, erfordern jedoch einen hohen Energieaufwand und können zu Schädigungen der Polyamidblends führen.

Aufgabe der Erfindung ist es, unter Beibehaltung der bekannten guten Eigenschaften die Nachteile des Standes der Technik zu vermeiden.

Die Aufgabe wurde gelöst durch Polyamid-Formmassen bestehend aus einem innigen Gemisch von

A. 60 bis 98 Gew.-% eines Polyamids mit einem $\eta_{rel}$-Wert im Bereich von 1,2 bis 2,4 (gemessen analog DIN 53 727 in m-Kresol bei 25 °C und einer Konzentration von 0,5 g/100 cm³ Lösung) und

B. 2 bis 40 Gew.-% eines Polyalkenameren mit einer Viskositätszahl im Bereich von 50 bis 250 ml/g (gemessen analog DIN 53 726 in Toluol bei 25 °C und einer Konzentration von 0,5 g/100 cm³ Lösung), wobei dieses Gemisch bei erhöhten Temperaturen mit 0,05 bis 5 Gew.-% - bezogen auf die Summe der Komponenten A. und B. - eines organischen Radikalbildners behandelt wurde.

Als Polyamide (Komponente A.) eignen sich die Homopolyamide PA 11, 12, 68, 69, 610, 612 o. ä. Es können aber auch entsprechende Copolyamide verwendet werden. Für die Herstellung der Polyamide werden als Monomere (cyclo)aliphatische Diamine mit 6 bis 12 C-Atomen, aliphatische oder aromatische Dicarbonsäuren mit 6 bis 12 C-Atomen oder Alpha,Omega-Aminocarbonsäuren bzw. deren Lactame mit 6 bis 12 C-Atomen eingesetzt.

Es werden im allgemeinen solche Polyamide erfindungsgemäß verwendet, die mindestens 5 Mol-%, vorzugsweise mindestens 10 Mol-% und insbesondere mindestens 20 Mol-%, Monomerbausteine mit

2

mindestens 8 C-Atomen enthalten. Bei Verwendung von polyalkenameren mit funktionellen Gruppen können vorteilhaft auch Monomerbausteine mit weniger als 8 C-Atomen verwendet werden.

Die Polyamide weisen eine relative Lösungsviskosität (gemessen analog DIN 53 727 in m-Kresol bei 25 °C und einer Konzentration von 0,5 g/100 cm³ Lösung) von 1,2 bis 2,4, vorzugsweise von 1,5 bis 2,4, auf.

Als Endgruppen der Polyamide liegen Carboxyl- und/oder Aminogruppen vor. Es können aber auch Polyamide mit nichtpolaren Endgruppen eingesetzt werden. Bei Verwendung von Polyalkenameren mit funktionellen Endgruppen werden Polyamide bevorzugt, deren Endgruppen zu 20 bis 85 %, insbesondere zu 40 bis 60 %, aus Aminogruppen bestehen.

Die Komponente A. kann auch ein Gemisch von zwei oder mehr Polyamiden sein.

Die Polyamide sind als solche bekannt und können nach dem Stand der Technik hergestellt werden (Kirk-Othmer, Encyclopedia of Chemical Technologie, Vol. 18, S. 328 bis 435 - Verlag Jo Wiley and sons (1982).

Polyalkenamere werden aus cyclischen Olefinen, die mindestens eine nicht substituierte Ringdoppelbindung aufweisen, mit Hilfe sogenannter Metathesekatalysatoren unter Öffnung des Ringes durch Polymerisation erhalten (DE-OSS 15 70 940, 16 45 038, 17 20 798, 17 70 143 und 18 05 158, DE-AS 12 99 868, GB-PSS 1 124 456, 1 194 013 und 1 182 975).

Unter cyclischen Olefinen werden ungesättigte Kohlenwasserstoffe mit 4 bis 12 (ausgenommen 6) Ring-Kohlenstoffatomen in einem oder mehreren Ringen verstanden, die in mindestens einem Ring mindestens eine nicht in Konjugation zu eventuell weiteren vorhandenen Doppelbindungen beliebigen Substitutionsgrades stehende, unsubstituierte Doppelbindung aufweisen, beispielsweise Cyclobuten, Cyclopenten, Cyclohepten, cis-und trans-Cycloocten, Cyclononen, Cyclodecen, Cycloundecen, cis- und trans-Cyclododecen, cis-cis-Cyclooctadien-(1.5), 1-Methylcyclooctadien-(1.5), 3-Methylcyclooctadien-(1.5), 3.7-Dimethylcyclooctadien-(1.5).

Die Doppelbindungen in den Polyalkenameren können in der cis- oder trans-Form vorliegen. Bevorzugt ist ein solcher Gehalt an trans-Doppelbindungen, daß die Polymeren einen hinreichenden kristallinen Anteil aufweisen, daß sie bei Raumtemperatur praktisch klebfrei und damit in Granulat-, Krümel-, Schrot- oder Pulverform gut handhabbar sind.

Geeignet sind Polyalkenamere mit Molekulargewichten entsprechend einer Viskositätszahl von 50 bis 250 ml/g, vorzugsweise 80 bis 160 ml/g, gemessen in Toluol bei 25 °C und einer Konzentration von 0,5 g/100 cm³ Lösung.

Polyalkenamere als solche sowie ihre Herstellung sind bekannt (K. J. Ivin, Olefin Metathesis, S. 190 ff. - Verlag Academic Press (1983).

In den Polyalkenameren können darüber hinaus noch Epoxi-, Carboxyl- oder Carbonsäureanhydridgruppen als funktionelle Gruppen vorhanden sein.

Die Einführung dieser funktionellen Gruppen in die Polyalkenamere erfolgt nach bekannten Verfahren in Lösung oder in der Schmelze.

Epoxygruppen lassen sich beispielsweise durch partielle Epoxidierung der Doppelbindungen mit Persäuren einführen. Der Gehalt an Epoxidsauerstoff sollte bei 0,5 bis 9, vorzugsweise 3 bis 8, Masse-% liegen. Alternativ gelangt man durch Pfropfung mit beispielsweise Glycidylmethacrylat zu brauchbaren Epoxyderivaten. Die Einführung von Carboxyl- bzw. Carbonsäureanhydridgruppen erfolgt durch Pfropfung mit geeigneten ungesättigten Monomeren, wie z. B. (Meth)acrylsäure, Maleinsäure(anhydrid), Fumarsäure, Maleinsäuremonoester, Fumarsäuremonoester, Norbornendicarbonsäureanhydrid, Itaconsäure(anhydrid) und analogen Verbindungen. Erfahrungsgemäß reicht ein Gehalt an gepfropftem Monomer von 0,2 bis 5 Gew.-%, vorzugsweise von 0,5 bis 4 Gew.-%, - bezogen auf das funktionelle Gruppen enthaltende Polyalkenamer. Die Modifizierung der Polyalkenamere ist nicht Gegenstand dieser Erfindung. Ob ein ausreichender Pfropfungsgrad vorliegt, ist für den Fachmann durch einen einfachen Versuch zu ermitteln. Neben den erfindungsgemäßen funktionellen Gruppen können weitere funktionelle Gruppen oder Substituenten eingeführt werden. Alle Modifizierungsmaßnahmen sind so durchzuführen, daß keine Vernetzung und/oder störende Molgewichtserhöhung bei den Polyalkenameren eintreten. Der Gelgehalt der modifizierten Polyalkenamere, bestimmt als unlöslicher Anteil in heißem Toluol, muß < 10 Gew.-%, vorzugsweise < 5 Gew.-%, betragen; die Viskositätszahlen sollen nicht wesentlich, d. h. maximal 20 %, oberhalb der Ausgangspolyalkenamere liegen.

Die erfindungsgemäßen Formmassen enthalten neben dem Polyamid 2 bis 40 Gew.-%, vorzugsweise 10 bis 30 Gew.-%, Polyalkenamer. Bei Verwendung von Polyalkenameren ohne funktionelle Gruppen sollte deren Anteil bei 2 bis 30 Gew.-%, vorzugsweise bei 5 bis 25 Gew.-% liegen.

Außer den Komponenten A. und B. können in den erfindungsgemäßen Formmassen, sofern erforderlich oder gewünscht, noch übliche Hilfs- und Zusatzstoffe, wie Stabilisatoren, Verarbeitungshilfsmittel, Antistatika, Farb- und Flammschutzmittel etc. eingearbeitet werden. Es ist auch möglich, Füll- und Verstärkungsstoffe, wie Mineralien, Glas- oder Kohlenstoffasern, Mikroglaskugeln, Ruß u. ä. einzusetzen.

In untergeordneten Mengen können auch polymere Zusatzstoffe, wie z. B. Polycarbonate, Schlagzähmodifier usw. mitverwendet werden.

Wesentlich für die erfindungsgemäßen Formmassen ist, daß vor der Einwirkung - d. h. Zerfall - des organischen Radikalbildners die Polyalkenameren zunächst in dem Polyamid durch Schmelzemischen fein dispergiert werden. Der mittlere Teilchendurchmesser der Polyalkenamer-Phase soll ≤ 10 µm, vor-

zugsweise ≤ 1 µm, betragen. Das Einarbeiten von Polyalkenameren ist problemlos in einem handelsüblichen Doppelschneckenkneter zu erreichen. Wenn durch Verwendung von Schnecken mit z. B. Knetblöcken oder Zahnscheiben die Mischwirkung zusätzlich unterstützt wird, lassen sich hohe Durchsätze erzielen. Die Temperatur der Schmelze liegt üblicherweise 10 bis 80 °C über der Schmelztemperatur der Polyamide.

Als organische Radikalbildner für die Behandlung der Formmassen eignen sich handelsübliche Azoverbindungen oder Peroxide, vorzugsweise Dialkylperoxide oder Alkylpersäureester.

Beispiele für geeignete Radikalbildner sind t-Butylperneodecanoat, t-Amylperpivalat, t-Butylperpivalat, Bis-(3.5.5-trimethylhexanoyl)-peroxid, Dioctanoylperoxid, Didecanoylperoxid, Dilauroylperoxid, t-Butyl-per-(2-ethylhexanoat), t-Butylperisobutyrat, t-Butyl-permaleinat, 1.1-Bis-(t-butylperoxy)-3.3.5-trimethyl-cyclohexan, 1.1-Bis-(t-butylperoxy)-cyclohexan, t-Butylperoxy-isopropylcarbonat, t-Butyl-per-(3.5.5-trimethylhexanoat), 2.5-Dimethylhexan-2.5-diperbenzoat, t-Butylperacetat, t-Butyl-perbenzoat, 5-Amyl-perbenzoat, 2.2-Bis-(t-butylperoxy)-butan, Dicumylperoxid, 2.5-Dimethylhexan-2.5-di-t-butylperoxid, t-Butyl-cumylperoxid, Bis(t-butyl-peroxy)-3.5-dimethyldioxolan-1.2, Di-t-butylperoxid, 2.5-Dimethyl-hexin-(3)-2.5-di-t-butylperoxid, Bis-(t-butylperoxyisopropyl)-benzol sowie insbesondere 2.2'-Azo-bis-(2-acetoxybutan) und 2.2'-Azo-bis-(2-acetoxypropan).

Besonders bevorzugt werden Bis-t-alkylperoxide und t-Alkyl-persäureester.

Die organischen Radikalbildner werden in Mengen von 0,05 bis 5 Gew.-%, vorzugsweise von 0,1 bis 3 Gew.-%, bezogen auf die Gesamtmenge an Komponenten A. und B. eingesetzt.

Die Behandlung der erfindungsgemäßen Mischungen aus A. und B. kann auf verschiedenen Wegen geschehen. Es ist möglich, entsprechende Radikalbildner bereits während oder gleich nach dem Vermischen von A. und B. unter Bedingungen, die noch keinen spontanen Zerfall der Radikalbildner bewirken, in die Schmelze einzuarbeiten und sich dann gegebenenfalls beschleunigt durch Temperaturerhöhung, zersetzen zu lassen.

Es kann aber auch erst die Mischung aus A. und B. separat hergestellt werden.

In einem weiteren Schritt - z. B. während des Einarbeitens von weiteren Hilfs- und Zusatzstoffen - würde dann der Radikalbildner zugemischt und zur Einwirkung kommen gelassen. Eine weitere Möglichkeit besteht darin, den Radikalbildner in flüssiger Form auf festes Granulat aufzubringen und ihn eindiffundieren zu lassen, ohne daß es zu einer Zersetzung kommt. Hierbei sollten die Radikalbildner bei der gewählten Applikationstemperatur stabil sein und in flüssiger Form vorliegen; bevorzugt werden Radikalbildner, die bei 50 °C, vorzugsweise bei 23 °C, flüssig sind. Alternativ ist es möglich, die Radikalbildner auch in Lösung zu applizieren. Die Lösemittel können während oder nach der Zersetzungsphase durch Anlegen von Vakuum (z. B. Entgasungsstufe bei Extrusion) wieder entfernt werden. Vorteilhaft ist die Einbringung der Radikalbildner zusammen mit flüssigen Hilfs- und Zusatzstoffen sofern keine Störung der Zersetzung erfolgt. Der Dampfdruck der Radikalbildner sollte während der Imprägnierphase unter 1 bar liegen, um zusätzliche technische Maßnahmen zu vermeiden.

Für die erforderliche Zersetzung und Einwirkung des Radikalbildners würde es z. B. genügen, daß das Granulat auf eine Temperatur erwärmt wird, die oberhalb der Zersetzungstemperatur und bei einer ausreichenden Halbwertszeit des Radikalbildners liegt. In bezug auf die Formmasse sollte in diesem Fall die Temperatur mindestens 10 °C unterhalb der Schmelz- bzw. Erweichungstemperatur liegen.

Die Auswahl eines geeigneten Radikalbildners kann dem Fachmann überlassen werden, wobei im wesentlichen die Zerfallstemperatur bzw. die temperaturabhängige Halbwertszeit des Zerfalls des Radikalbildners und die vorgesehenen Zersetzungsbedingungen (z. B. längere Zeit bei relativ niedriger Temperatur in fester Phase oder kürzere Zeit bei hoher Temperatur in der Schmelze) aufeinander abgestimmt werden müssen unter Berücksichtigung der Temperaturbelastbarkeit der Formmasse. Entsprechende Produktdaten der Radikalbildner sind literaturbekannt. In der Regel genügt bei homogener Verteilung des Radikalbildners in der Schmelze oder in der festen Phase eine Einwirkungszeit von ca. 4 Halbwertszeiten bei der jeweiligen Temperatur.

Die erfindungsgemäßen Formmassen weisen den unerwarteten Vorteil auf, daß mit leicht zugänglichen, d. h. handelsüblichen, die Schlagzähigkeit verbessernden Polymeren gearbeitet werden kann, während der Stand der Technik zwar wirksame Zusatzpolymere (funktionalisierte Kautschuke, Polyolefine) beschreibt, diese aber jeweils gesondert und nur in kleinen Mengen hergestellt werden müßten.

Die Molgewichte werden beim Polyamid als relative Lösungsviskosität (gemessen analog DIN 53 727 in m-Kresol bei 25 °C und einer Konzentration von 0,5 g/100 cm³ Lösung) und beim Polyalkenamer als Viskositätszahl (J) (gemessen analog DIN 53 726 in Toluol bei 25 °C und einer Konzentration von 0,5 g/100 cm³ Lösung) bestimmt.

Die Kerbschlagzähigkeitsprüfungen nach DIN 53 453 wurden an gespritzten Normkleinstäben bei den angegebenen Temperaturen durchgeführt. Zwischen dem Verspritzen und Prüfen wurden die Stäbe ca. 24 h bei 50 % rel. Feuchte gelagert (23 °C).

In den folgenden Beispielen sind alle Angaben von Teilen bzw. % als Gew.-Teile bzw. Gew.-% zu verstehen.

Mit Buchstaben gekennzeichnete Beispiele sind nicht erfindungsgemäß.-

4

Beispiele

Herstellung der funktionelle Gruppen aufweisenden Polyalkenamere

Den in den Beispielen verwendeten funktionalisierten Polyalkenameren lag als Ausgangsprodukt ein handelsübliches Polyoctenamer (J: 120 cm³/g; Trans-Gehalt der Doppelbindungen: ca. 80 % - VESTENAMER[R] 8012) zugrunde. Es wurden 3 funktionalisierte Polyoctenamere (TOR 1 bis 3) hergestellt.

TOR 1

2 Gew.-Teile Fumarsäure und 98 Gew.-Teile Polyoctenamer wurden in einen Doppelschneckenextruder (Typ ZE 40 - Fa. Berstdorff) bei 310 °C umgesetzt und anschließend granuliert. Aus dem Vergleich des IR-Spektrums des Ausgangsproduktes und des durch Umfällen von freien Monomeren gereinigten TOR 1 war zu erkennen, daß ≥ 80 Gew.-% der Fumarsäure gebunden sind.
Gelgehalt: < 1 Gew.-%
Viskositätszahl (J): 111 cm³/g

TOR 2

Entsprechend TOR 1 wurde ein Produkt hergestellt aus 4 Gew.-Teilen Fumarsäure und 96 Gew.-Teilen Polyoctenamer.
Reaktionstemperatur: 310 bis 315 °C
Gelgehalt: 2 bis 3 Gew.-%
Viskositätszahl (J): 112 cm³/g

TOR 3

Polyoctenamer wurde in Chloroform in bekannter Weise mit $H_2O_2$/Ameisensäure epoxidiert und durch Einrühren in Methanol ausgefällt. Das säurefrei gewaschene pulverförmige Produkt enthielt 7,15 Gew.-% Gesamtsauerstoff; durch Titration mit 0,1 n HCl in Tetrahydrofuran wurde ein Epoxidsauerstoff-Gehalt von 6,4 Gew.-% gefunden.
Gelgehalt: < 1 %
Viskositätszahl (J): 107 cm³/g

Beispiele 1 bis 4 und A (Tabelle I)

Ein handelsübliches Polyamid 12 ($\eta_{rel}$: 1,91 - VESTAMID[R] L 1901) und ein handelsübliches trans-Polyoctenamer (J: 120 cm³/g; Trans-Gehalt der Doppelbindungen: ca. 80 % - VESTENAMER[R] 8012) werden in den in Tabelle 1 angegebenen Mengen in einem Labordoppelschneckenkneter (Typ DSK 42/5 - Fa. Brabender) bei ca. 220 °C und 25 Upm der Schnecken gemischt, als Strang extrudiert, granuliert und getrocknet. Das Granulat wird mit 1 Gew.-% Di-t-butylperoxid versetzt und unter ständigem Umwälzen zunächst 3 h bei 90 °C und anschließend 4 h bei 150 °C behandelt. Dieses behandelte Granulat sowie das Polyamid 12 werden unter üblichen Bedingungen zu Normkleinstäben verspritzt und der Kerbschlagprüfung nach DIN 53 453 unterworfen.

## Tabelle I

| Beispiel | PA 12 *) | TOR **) | Kerbschlagzähigkeit $[kJ/m^2]$ | | | |
|---|---|---|---|---|---|---|
| | [Gew.-%] | [Gew.-%] | 23 °C | 0 °C | -20 °C | -40 °C |
| A | 100 | 0 | 15,6 | – | – | 10,3 |
| 1 | 95 | 5 | 18,2 | 13,8 | 11,8 | 8,7 |
| 2 | 90 | 10 | 11/11 | 3/11 oB | 4/10 an****) | 1/11 oB |
| | | | oB ***) | 8/11 an | 56,4 | 27,2 |
| 3 | 85 | 15 | 11/11 | 11/11 oB | 1/11 oB | 31,2 |
| | | | oB | | 7/11 an | |
| | | | | | 56,4 | |
| 4 | 80 | 20 | 11/11 | 9/11 oB | 5/11 oB | 1/11 oB |
| | | | oB | 2/11 an | 6/11 an | 23,0 |

*) Polyamid 12

**) Polyoctenamer

***) ohne Bruch

****) angebrochen

<u>Beispiel 5</u>

Beispiel 3 wurde wiederholt mit dem Unterschied, daß man das Peroxid auf die granulierte Formmasse aufbrachte und es nur bei 90 °C/3 h einwirken ließ. Anschließend wurde das so behandelte Granulat ohne weitere Behandlung sofort bei ca. 220 °C zu Normkleinstäben verspritzt. Die Kerbschlagzähigkeitsprüfung ergab folgende Werte:

23 °C: 7/11 ohne Bruch; 4/11 angebrochen
0 °C: 3/11 ohne Bruch; 8/11 angebrochen
-20 °C: 10/11 angebrochen; Rest: 37,7 kJ/m²
-40 °C: 23,2 kJ/m²

<u>Beispiele 6, 7 und B (Tabelle II)</u>

Es wurde eine Formmasse gemäß Beispiel 3 durch Schmelzemischen hergestellt. Auf das erhaltene Granulat wurde 1 Gew.-% eines phlegmatisierten Peroxids, bestehend aus 40 Gew.-% Dicumylperoxid und 60 Gew.-% Polyethylen, in einem Mischer aufgetrommelt. Dieses Produkt wurde einmal bei 220 °C direkt verspritzt (Beispiel 6), zum anderen vor dem Verspritzen noch einmal auf einem Doppelschneckenextruder umgranuliert, wobei die erste beheizte Extruderzone auf 185 °C, die folgenden auf 220 °C gehalten wurden und die mittlere Verweilzeit ca. 3 Minuten betrug (Beispiel 7). Zum Vergleich (Beispiel B) wurden ohne Vordispergierung des Polyoctenamers im Polyamid 12 alle 3 Komponenten bei 220 °C im Doppelschneckenkneter umgranuliert und dann verspritzt.

## Tabelle II

| Beispiel | Kerbschlagzähigkeit (23 °C) |
| --- | --- |
| 6 | 3/11 angebrochen, Rest: 26,5 kJ/m² |
| 7 | 11/11 angebrochen |
| B | 16,5 kJ/m² |

### Beispiele 8 und C (Tabelle III)

Auf 100 Gew.-Teile einer granulierten Schmelzemischung aus 85 Gew.-Teilen Polyamid 12 und 15 Gew.-Teilen Polyoctenamer ließ man eine Mischung aus 5 Gew.-Teilen p-Hydroxybenzoesäure-[2-ethylhexyl]ester (Weichmacher) und 0,5 Gew.-Teile 2.5-Dimethyl-2.5-bis(t-butylperoxy)-hexin-(3) bei 70 °C unter ständigem Umwälzen eindiffundieren. Nachdem das Granulat äußerlich trocken war, hielt man die Temperatur noch 1 h bei 70 °C. Das erhaltene Produkt wurde ohne weitere Behandlung verspritzt (Beispiel 8).

Zum Vergleich (Beispiel C) wurden 85 Gew.-Teile Polyamid 12-Granulat, 15 Gew.-Teile Polyoctenamer-Granulat und 0,5 Gew.-Teile des Peroxids, das zur Phlegmatisierung und besseren Handhabung an 0,5 Gew.-Teilen Calciumcarbonat adsorbiert war, in einem Doppelschneckenkneter bei 220 °C gemischt, und anschließend wurden 5 Gew.-Teile des obengenannten Weichmachers eingearbeitet. Dann erfolgte die Spritzgußverarbeitung.

## Tabelle III

| Beispiel | Kerbschlagzähigkeit $[kJ/m^2]$ | | | |
| --- | --- | --- | --- | --- |
| | 23 °C | 0 °C | -20 °C | -40 °C |
| 8 | 11/11 oB*) | 4/11 oB | 20,1 | 16,8 |
| | | 7/11 an**) | | |
| C | 11/11 oB | 23,1 | 13,6 | 12,3 |

*) ohne Bruch

**) angebrochen

### Beispiele 9 und D (Tabelle IV)

Es wurde wie in Beispiel 4 gearbeitet, mit dem Unterschied, daß das dort verwendete Polyamid 12 durch einen niedriger molekularen Typ mit einem $\eta_{rel}$-Wert von 1,50 ersetzt wurde.

## Tabelle IV

| Beispiel | TOR-Gehalt [%] | Kerbschlagzähigkeit [kJ/m²] | | | |
|---|---|---|---|---|---|
| | | 23 °C | 0 °C | -20 °C | -40 °C |
| D | 0 | 5,5 | - | - | 4,5 |
| 9 | 20 | 11/11 oB | 7/11 oB | 13,2 | 8,6 |
| | | | 27,6 | | |

### Beispiele 10 bis 13 (Tabelle V)

Es wird entsprechend den Beispielen 1 bis 4 gearbeitet mit der Ausnahme, daß ein funktionalisiertes Polyoctenamer (TOR 1) eingesetzt wird.

## Tabelle V

| Beispiel | PA 12 *) [Gew.-%] | TOR 1 [Gew.-%] | Kerbschlagzähigkeit [kJ/m²] | | | |
|---|---|---|---|---|---|---|
| | | | 23 °C | 0 °C | -20 °C | -40 °C |
| A | 100 | 0 | 15,6 | - | - | 10,3 |
| 10 | 95 | 5 | 24,4 | 16,9 | 16,3 | 13,1 |
| 11 | 90 | 10 | oB**) | 3/11 oB | 4/11 oB | 4/11 an |
| | | | | 8/11 an***) | 7/11 an | 31,0 |
| 12 | 85 | 15 | oB | 6/11 oB | 5/11 oB | 28,4 |
| | | | | 5/11 an | 6/11 an | |
| 13 | 80 | 20 | oB | oB | 8/11 oB | 2/11 oB |
| | | | | | 3/11 an | 9/11 an |

*)    Polyamid 12

**)   ohne Bruch

***)  angebrochen

### Beispiel 14

Beispiel 13 wurde wiederholt mit dem Unterschied, daß man das Peroxid auf die granulierte Formmasse aufbrachte und es bei 90 °C/3 h eindiffundieren ließ. Anschließend wurde das so behandelte Granulat ohne weitere Behandlung sofort bei ca. 220 °C zu Normkleinstäben verspritzt.

Bei der Prüfung der Kerbschlagzähigkeit waren alle Proben bei 23 °C, 0 °C, -20 °C nicht durchgebrochen, ebenso wie 10 von 11 Proben bei -40 °C. Die 11. Probe wies einen Wert von 44,9 kJ/m auf.

### Beispiele 15, 16 und E (Tabelle VI)

In 80 Gew.-Teile eines Polyamids 12 ($\eta_{rel}$-Wert: 1,50; Verhältnis der Amino-/Carboxylendgruppen: ca. 4/6) wurden mit Hilfe eines Labordoppelschneckenkneters 20 Gew.-Teile TOR 1 bzw. TOR 2 in der Schmelze bei 230 °C eingemischt und die Mischung granuliert. Das reine Polyamid 12 sowie die erhaltenen Formmassen wurden zu Normkleinstäben verspritzt, nachdem die Formmassen mit 0,7 Gew.-% t-Butylperbenzoat bei 90 °C/3 h unter ständigem Umwälzen imprägniert und anschließend bei 150 °C/1 h behandelt worden waren.

## Tabelle VI

| Beispiel | TOR-Typ | Kerbschlagzähigkeit $[kJ/m^2]$ | | | |
|---|---|---|---|---|---|
| | | 23 °C | 0 °C | -20 °C | -40 °C |
| E | – | 5,5 | – | – | 4,5 |
| 15 | TOR 1 | oB*) | 6/11 oB 5/11 an**) | 4/11 oB 7/11 an | 9/11 an[1] |
| 16 | TOR 2 | oB | oB | 3/11 oB 8/11 an | 4/11 an[2] |

*) ohne Bruch

**) angebrochen

[1] Restliche Proben: 38,3 kJ/m²

[2] Restliche Proben: 27,7 kJ/m²

### Beispiel 17

80 Gew.-Teile eines Polyamids 12 ($\eta_{rel}$: 1,68, Verhältnis der Amino/Carboxylgruppen: 8/2) wurden mit 20 Gew.-Teilen TOR 3 in einem Doppelschneckenkneter (Typ LSM 30.34 - Fa. Leistritz) bei 236 °C vermischt und anschließend granuliert. Das Granulat wird nach Behandlung (entsprechend den Beispielen 1 bis 4) mit Di-t-butylperoxid zu Normkleinstäben verspritzt. Die Prüfung der Kerschlagzähigkeit ergab nachstehende Werte:

| 23 °C | 0 °C | -20 °C | -40 °C |
|---|---|---|---|
| oB*) | oB | oB | 22,5 kJ/m² |

*) ohne Bruch

### Patentansprüche

1. Schlagzähe Polyamid-Formmasse bestehend aus einem innigen Gemisch von
A. 60 bis 98 Gew.-% eines Polyamids mit einem $\eta_{rel}$-Wert im Bereich von 1,2 bis 2,4 (gemessen analog DIN 53 727 in m-Kresol bei 25 °C und einer Konzentration von 0,5 g/100 cm³ Lösung) und
B. 2 bis 40 Gew.-% eines Polyalkenameren mit einer Viskositätszahl im Bereich von 50 bis 250 ml/g (gemessen analog DIN 53 726 in Toluol bei 25 °C und einer Konzentration von 0,5 g/100 cm³ Lösung), wobei dieses Gemisch bei erhöhten Temperaturen mit 0,05 bis 5 Gew.-% - bezogen auf die Summe der Komponenten A. und B. - eines organischen Radikalbildners behandelt wurde.

2. Schlagzähe Polyamid-Formmasse gemäß Anspruch 1 bestehend aus einem Gemisch von
A. 70 bis 98 Gew.-% eines Polyamids und
B. 2 bis 30 Gew.-% eines Polyalkenameren.

3. Schlagzähe Polyamid-Formmasse gemäß Anspruch 1, wobei als Komponente B. ein Polyalkenamer mit Epoxi-, Carboxyl- oder Carbonsäureanhydridgruppen als funktionellen Gruppen eingesetzt wird.

## Claims

1. An impact-resistant polyamide moulding composition composed of an intimate mixture of

A. 60 to 98% by weight of a polyamide having a $\eta_{rel}$ value in the range of from 1.2 to 2.4 (measured in the manner of DIN 53 727 in m-cresol at 25°C and at a concentration of 0.5 g/100 cm³ of solution) and

B. 2 to 40% by weight of a polyalkenamer having a viscosity number in the range of from 50 to 250 ml/g (measured in the manner of DIN 53 726 in toluene at 25°C and at a concentration of 0.5 g/100 cm³ of solution),

this mixture having been treated at elevated temperatures with 0.05 to 5% by weight, relative to the sum of the components A. and B., of an organic free-radical former.

2. An impact-resistant polyamide moulding composition according to claim 1, composed of a mixture of

A. 70 to 98% by weight of a polyamide and

B. 2 to 30% by weight of a polyalkenamer.

3. An impact-resistant polyamide moulding composition according to claim 1, a polyalkenamer having epoxy, carboxyl or carboxylic acid anhydride groups as functional groups being used as component B.

## Revendications

1. Masse à mouler à base de polyamide résistant au choc, constituée par un mélange intime de

A. 60 à 98% en poids d'une polyamide présentant une valeur êta$_{rel.}$ comprise dans un domaine de 1,2 à 2,4 (mesurée d'une manière analogue à DIN 53 727 dans le méta-crésol à 25°C et à une concentration de 0,5 g par 100 cm³ de solution) et

B. 2 à 40% en poids d'un poly-alkénamère d'un indice de viscosité compris dans un domaine de 50 à 250 ml/g (mesuré d'une manière analogue à DIN 53 726 dans le toluène à 25°C et à une concentration de 0,5 g par 100 cm³ de solution),

ce mélange ayant été traité, à des températures élevées, par 0,05 à 5% en poids, relativement à la somme des composants A. et B., d'un formateur organique de radicaux.

2. Masse à mouler à base d'une polyamide résistant au choc selon la revendication 1, constituée par un mélange de

A. 70 à 98% en poids d'une polyamide et

B. 2 à 30% en poids d'un poly-alkénamère.

3. Masse à mouler à base d'une polyamide résistant au choc selon la revendication 1, le composant B. étant un poly-alkénamère comportant, comme groupes fonctionnels, des groupes époxy, carboxyle ou anhydride d'acide carboxylique.